# NOUVEAU FASCICULE DE BREVET EUROPEEN

(11) **EP 3 174 794 B2**
(45) Date de publication et mention de la décision concernant l'opposition: **17.02.2021**
(45) Mention de la délivrance du brevet: 08.11.2017
(21) Numéro de dépôt: 16785247.4
(22) Date de dépôt: 29.09.2016
(51) Int. Cl.: B64G 1/10, B64G 1/64

(54) **SATELLITE COMPRENANT UN INSTRUMENT OPTIQUE DE PRISE DE VUE**
SATELLIT MIT EINEM OPTISCHEN FOTOAPPARAT
SATELLITE COMPRISING AN OPTICAL PHOTOGRAPHY INSTRUMENT

(30) Priorité: 02.10.2015 FR 1559387
(43) Date de publication de la demande: 07.06.2017
(73) Titulaire: Airbus Defence and Space SAS, 31402 Toulouse Cedex 4 (FR)
(72) Inventeur: FAYE, Frédéric, 31402 Toulouse (FR); BEAUFUME, Eric, 31402 Toulouse (FR); COTTIER, Jacques, 31402 Toulouse (FR)
(74) Mandataire: Plasseraud IP
(86) Numéro de dépôt international: PCT/FR2016/052476
(87) Numéro de publication internationale: WO 2017/055750

(56) Documents cités:
- EP-A1- 2 662 287
- WO-A2-2012/116366
- CN-A- 104 648 693
- FR-A1- 2 959 490
- "EROS-B - eoPortal Directory- Staellite Missions", EROS-B ( Earth Remote Observation Statellite-B), 4 April 2015 (2015-04-04), Retrieved from the Internet: URL:https://directory:eoportal.orq/web/eop ortal/satellite-missions/e/eros-b

## Description

L'invention concerne le domaine des véhicules spatiaux, et plus précisément des satellites dont la mission implique la présence d'instruments optiques, tels que des satellites d'observation ou de mesure.

Afin d'être largué dans l'espace, le satellite est d'abord monté et solidarisé sur un lanceur. Le lanceur est ensuite propulsé dans l'espace, puis le satellite est désolidarisé du lanceur pour être largué sur l'orbite déterminée.

Avant d'être largué, mais également pendant la phase de largage, le satellite dans le lanceur est soumis à de nombreuses contraintes liées aux chocs et aux vibrations, et la solidarisation du satellite dans le lanceur ainsi que le satellite lui-même doivent pouvoir y résister. Toutefois, la transmission des contraintes au satellite doit être contrôlée avec soin, et plus particulièrement dans le cas où le satellite porte un instrument optique fragile, que les chocs et vibrations peuvent dérégler voire endommager.

Un instrument optique pour les missions spatiales est formé typiquement d'au moins un objectif dioptrique, catadioptrique ou à miroir, permettant de focaliser des rayons, par exemple les rayons lumineux, pour obtenir une image dans un plan focal équipé de systèmes de détection.

L'axe de visée de l'instrument optique, c'est-à-dire la direction dans laquelle l'instrument optique regarde, peut être confondu avec l'axe optique de l'objectif de l'instrument ou peut former un angle avec l'axe optique au moyen de miroirs de renvoi. Lorsque l'instrument optique est un instrument de prise de vue, c'est-à-dire comprenant au moins un capteur permettant d'y former une image d'une région, par exemple une région du sol terrestre, l'instrument optique définit également un champ de vue correspondant au cône tronqué s'étendant depuis la surface fonctionnelle du capteur, c'est-à-dire la surface du capteur sur laquelle les images se forment jusqu'à la région de prise de vue.

L'instrument optique est typiquement monté sur une structure de support, par exemple une plateforme elle-même montée sur le satellite, l'axe de visée de l'instrument étant soit perpendiculaire à la plateforme, soit parallèle à la plateforme. Plus précisément, l'objectif est porté par la plateforme, son axe optique étant perpendiculaire à la plateforme, des miroirs de renvoi permettant d'incliner l'axe de visée. La structure de support peut porter en outre d'autres équipements du satellite.

L'intégrité de l'instrument et l'alignement de ses constituants peuvent être altérés par les chocs et vibrations pendant le lancement et le largage, avec pour conséquence une dégradation potentielle des performances de l'instrument.

Ainsi, pour assurer à la fois une bonne tenue mécanique du satellite dans le lanceur et la protection de l'instrument optique, il est de coutume de solidariser le satellite au lanceur en assemblant la structure de support au lanceur, via un anneau d'interface satellite du lanceur, de sorte que l'axe de visée pointe soit à l'opposé de l'anneau d'interface, soit dans une direction perpendiculaire. L'instrument optique est éloigné de l'anneau d'interface par la structure de support, limitant la transmission des chocs et vibrations depuis l'anneau d'interface à l'instrument optique.

Cette disposition est également la conséquence de la chaîne de fabrication et de montage du satellite. En effet, la structure de support et l'instrument optique sont en général fabriqués séparément à deux emplacements distincts, puis assemblés. Ainsi, l'instrument est rapporté sur la structure de support, et il est alors naturel d'orienter l'axe de visée à l'opposé de la structure de support ou perpendiculairement à celle-ci. Le volume interne de la structure est par ailleurs utilisé pour l'accommodation des équipements du satellite, notamment les électroniques et le ou les réservoirs d'ergols et former ainsi une plateforme de servitude.

Le document FR 2 959 490 décrit un exemple d'un tel satellite. Selon cet exemple, la structure du satellite comprend un plateau porte-équipement et des murs porteurs, en l'occurrence quatre, formant une case de servitude et fixés rigidement à un anneau d'interface lanceur, cet anneau étant destiné à être fixé sur l'anneau d'interface satellite d'un lanceur. Selon un mode de réalisation, le satellite comprend une case de charge utile fixée à une extrémité aux murs porteurs et à une autre extrémité à un plateau, ce plateau supportant un instrument optique, dont l'ouverture est orientée soit à l'opposé de l'anneau d'interface soit sur un côté. Chacune des cases peut comporter divers équipements pour le fonctionnement du satellite et de l'instrument optique. L'instrument optique est ainsi éloigné de l'anneau d'interface par la case de servitude et la case de charge utile, permettant de limiter la transmission des contraintes depuis le lanceur jusqu'à l'instrument optique.

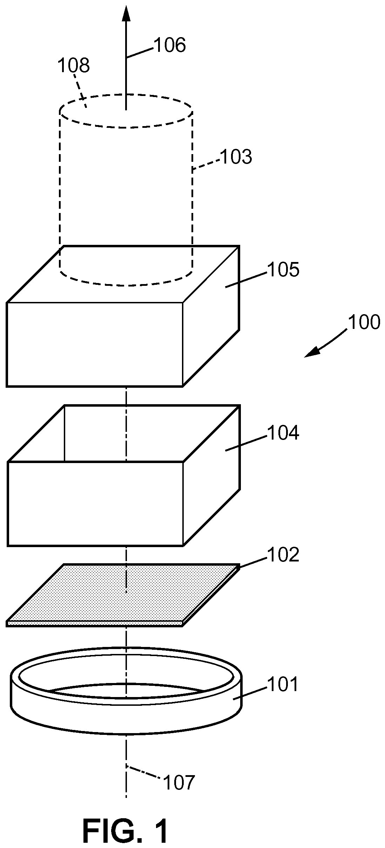

La figure 1 illustre de manière schématique un tel satellite **100** selon l'état de la technique, dans une vue éclatée. Le satellite 100 selon l'état de la technique comprend un anneau **101** d'interface lanceur, destiné à être solidarisé avec un anneau d'interface satellite d'un lanceur, un plateau **102** de support fixé à l'anneau d'interface lanceur, un instrument optique occupant un volume **103** représenté par un cylindre en traits discontinus monté sur le support 102, une structure **104** de support fixée au plateau 102 de support et une structure **105** destinée à supporter l'instrument optique et éventuellement les électroniques associées à cet instrument. Selon cette conception, l'instrument 103 optique comprend un axe **106** de visée parallèle à l'axe **107** de l'anneau 101 d'interface et orienté à l'opposé de l'anneau 101, de sorte que l'ouverture **108** de l'instrument 103 est dirigée à l'opposé de l'anneau 101. Comme déjà présenté, en variante, l'axe 106 de visée peut être perpendiculaire à l'axe 107 de l'anneau 101, de sorte que l'ouverture 108 est sur un côté. Ce sont les deux seules dispositions possibles pour un satellite selon cette conception.

Un autre satellite selon cette conception, et conforme au préambule de la revendication 1, est divulgué dans le document de brevet chinois CN 104 648 693 A.

Un inconvénient de cette conception est qu'elle limite les performances en termes de résolution notamment de l'instrument optique.

En effet, les performances de l'instrument optique sont, en général, liées à son diamètre, c'est-à-dire au diamètre de l'objectif : plus ce dernier est important, meilleures sont les performances en termes notamment de résolution et sensibilité radiométrique. Cela est particulièrement le cas lorsque l'instrument optique est un télescope, et plus précisément un télescope de type Korsch couramment utilisé dans le domaine spatial pour sa compacité, dans lequel le diamètre du ou des miroirs et la longueur de la focale sont liés. Ainsi, si les performances du télescope doivent être augmentées, il faut augmenter son diamètre, et sa longueur, ce qui implique une augmentation des dimensions du satellite.

Or, dans le lanceur, la place disponible pour le satellite est limitée en largeur et en hauteur par le volume disponible sous coiffe. Dans le cas d'un lancement double, la structure de lancement double, par exemple la structure VESPA sur le lanceur VEGA, comprend un compartiment inférieur dans lequel les dimensions du passager sont particulièrement contraintes.

Par WO 2012/116366 A2, on connait un téléscope à pétales multiples formant un miroir primaire déployable, dont chaque pétale, et donc aussi le miroir primaire, est déployable sur un moyeu support du téléscope, entre une position escamotée et une position déployée, par un ensemble articulé, animé par un ensemble de motorisation faisant usage d'une énergie mécanique emmagasinée, et d'une interface cinématique entre le moyeu support et le miroir primaire, afin de maintenir les pétales du miroir en alignement les uns par rapport aux autres dans la position déployée, dans laquelle l'axe optique de visée du miroir primaire est orienté du côté opposé au moyeu support, par lequel le téléscope est monté sur une platine de la structure d'un satellite, dans la partie adjacente à une interface lanceur du satellite. Le téléscope, ainsi que les ensembles articulés, de motorisation et d'alignement des pétales du miroir primaire sont donc assemblés près de ladite interface lanceur du satellite, et ne peuvent donc pas être facilement isolés des chocs et vibrations de la liaison de l'interface lanceur du satellite à une interface satellite du lanceur, de sorte que ce montage présente les mêmes inconvénients que ceux de l'état de la technique présenté ci-dessus.

Par ailleurs, le document de brevet EP 2 662 287 A1 divulgue un système de lancement multiple de satellites, comprenant au moins deux satellites empilés verticalement l'un sur l'autre et reliés l'un à l'autre de manière séparable dans la coiffe d'un lanceur, et tels qu'une interface lanceur du satellite inférieur, agencée à l'extrémité inférieure d'une structure centrale cylindrique et creuse du satellite inférieur, est fixée de manière séparable à une interface satellite sur une base de la coiffe du lanceur, et que l'extrémité supérieure de ladite structure centrale cylindrique du satellite inférieur est reliée de manière séparable, par un système d'interface auxiliaire, à l'extrémité inférieure d'une structure centrale cylindrique et creuse du satellite supérieur de l'empilement. Ce document de brevet ne donne aucune indication sur le montage éventuel d'un moins un instrument optique de prise de vue avec objectif principal à axe optique sur l'un et/ou l'autre des deux satellites empilés.

Selon la conception de l'état de la technique, la longueur du satellite est déjà en partie occupée par la structure de support, de sorte que la longueur de l'instrument et donc le diamètre de l'instrument sont limités par le diamètre de la coiffe ou de la structure de lancement double.

Il existe donc un besoin pour une nouvelle conception de satellite surmontant notamment les inconvénients précités.

Un objet de la présente invention est alors de proposer un nouveau satellite comprenant un instrument optique aux performances améliorées tout en garantissant la protection de l'instrument.

A cet effet, selon un premier aspect, l'invention concerne un satellite selon la revendication 1, et selon un deuxième aspect, l'invention concerne un satellite selon la revendication 2.

Le système d'interface lanceur est alors relié au dispositif de liaison par l'extrémité inférieure et l'axe optique de l'instrument optique est dirigé de l'extrémité supérieure vers l'extrémité inférieure du dispositif de liaison, le système d'interface lanceur étant à l'extérieur du champ de vue de l'instrument.

Selon un mode de réalisation, le dispositif de liaison comprend une paroi latérale de forme cylindrique d'axe parallèle à l'axe de visée, et comprend une surface intérieure tournée vers l'axe de visée, définissant un espace intérieur dans lequel s'étend au moins une partie de l'objectif principal de l'instrument optique.

L'objectif principal est par exemple un télescope comprenant au moins un miroir primaire, l'axe optique du miroir primaire étant l'axe optique de l'objectif, et le miroir primaire s'étendant, de préférence complètement, dans l'espace intérieur.

La paroi latérale peut être cylindrique de courbe directrice circulaire, ou cylindrique de courbe directrice polygonale, ou encore cylindrique de courbe directrice carrée ou rectangulaire, de sorte que le dispositif de liaison comprend quatre murs.

Selon un mode de réalisation, le satellite comprend en outre au moins un équipement secondaire fixé sur le dispositif de liaison.

L'équipement secondaire comprend par exemple un réservoir d'ergol pour la propulsion ou un réservoir de gaz pour la propulsion électrique.

Selon un mode de réalisation, le système d'interface lanceur est un anneau d'interface, l'axe de visée de l'instrument optique traversant l'anneau d'interface.

Par exemple, l'instrument optique présente un diamètre supérieur à 50 cm, et qui est par exemple de 100 cm.

Selon un mode de réalisation, l'extrémité supérieure du dispositif de liaison comprend un système d'interface auxiliaire destiné à coopérer avec un autre satellite pour former un empilement.

D'autres avantages et caractéristiques apparaîtront à la lumière de la description de modes de réalisation particuliers de l'invention accompagnées des figures dans lesquelles :
La figure 1 est une représentation schématique d'une vue éclatée d'un satellite selon l'état de la technique.
La figure 2 est une représentation schématique d'une vue éclatée d'un satellite selon l'invention.
La figure 3 est une représentation schématique d'une vue en coupe d'un exemple d'un satellite selon l'invention.
La figure 4 est une vue tridimensionnelle d'un exemple de réalisation d'un satellite.
La figure 5 est une vue éclatée du satellite de la figure 4.
La figure 6 est une vue de dessous du satellite des figures 4 et 5.
La figure 7 est une représentation schématique d'une vue en coupe d'un empilement de deux satellites selon l'invention.

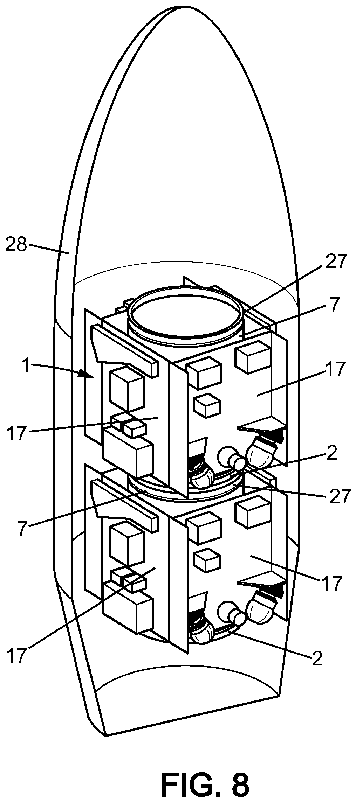

La figure 8 est une représentation schématique d'une coiffe d'un lanceur de type VEGA pour un lancement double, comprenant deux compartiments dont un compartiment inférieur de type VESPA dans lequel est placé le satellite des figures 4 à 6.

La figure 1 a déjà été décrite dans l'introduction.

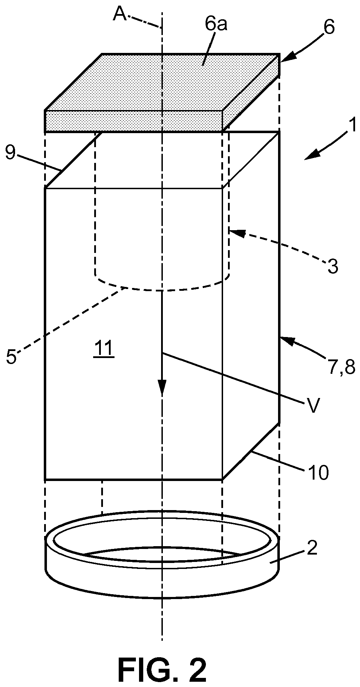

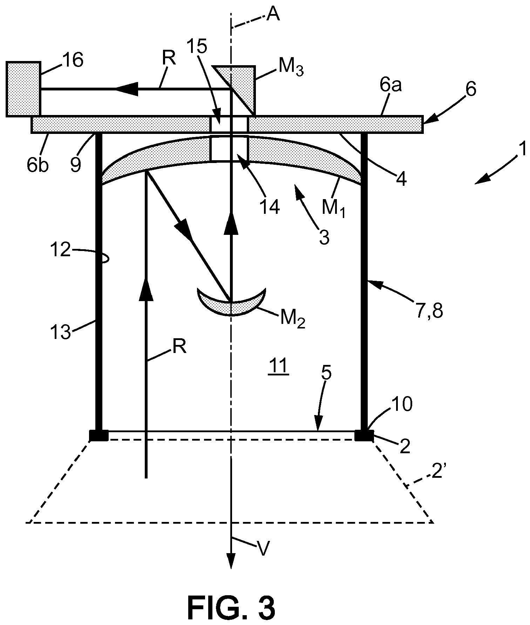

Sur les figures 2 et 3, il est représenté de manière schématique un premier exemple de réalisation d'un satellite **1** selon l'invention, comprenant un système **2** d'interface lanceur, destiné à être solidarisé, de manière amovible, à un système **2'** d'interface satellite d'un lanceur du satellite représenté en traits discontinus sur la figure 3. Le système 2 d'interface est, de manière commune et comme cela sera le cas dans la suite de la description, un anneau d'interface, d'axe A. Le diamètre de l'anneau 2 d'interface est généralement choisi parmi les dimensions standards dans le domaine spatial, que sont : 937 mm, 1194 mm et 1666 mm. Le système 2' d'interface satellite est alors de forme annulaire et de dimensions complémentaires. Les deux anneaux 2, 2' sont assemblés à l'aide d'un mécanisme de verrouillage, non illustré ici, qui se présente par exemple sous la forme d'une ceinture de serrage, également appelée sangle, laquelle est solidaire d'un des deux anneaux, et avantageusement de l'anneau 2 d'interface lanceur du satellite 1.

Le satellite 1 comprend un instrument **3** optique, représenté sur la figure 2 sous la forme d'un cylindre en traits discontinus matérialisant l'espace occupé par l'instrument 3 optique. L'objectif de l'instrument 3 optique est par exemple un télescope et comprend un miroir **M₁** primaire, aussi appelé miroir d'entrée présentant un axe optique qui correspond ici à l'axe **V** de visée de l'instrument. L'instrument 3 optique fait partie ici de la charge utile du satellite, c'est-à-dire l'équipement principal de la mission du satellite 1.

Le miroir M₁ primaire du satellite 1 est fixé sur une platine **6** de support. La platine 6 de support se présente sous la forme d'une plaque comprenant une surface 6a supérieure et une surface 6b inférieure, ces deux surfaces 6a, 6b étant sensiblement perpendiculaires à l'axe V de visée de l'instrument 3.

Les adjectifs « supérieur » et « inférieur » et leur variante sont utilisés ici à des fins de clarté en référence à l'orientation naturelle des figures, et correspondent à la position du satellite dans le lanceur quand celui-ci est en position de lancement.

Plus précisément, selon l'exemple présenté sur les figures, l'arrière du miroir M₁ de l'instrument 3 est en contact avec la surface 6b inférieure de la platine 6 de support.

Le satellite 1 comprend en outre un dispositif **7** de liaison entre l'instrument 3 optique et l'anneau 2 d'interface lanceur. Selon le mode de réalisation présenté ici, mais de manière non limitative, le dispositif 7 de liaison forme le corps **7** principal, c'est-à-dire une structure porteuse du satellite 1, sur laquelle, comme cela sera vu plus loin, en plus de l'instrument 3 optique, des équipements secondaires peuvent être fixés. Plus précisément, dans ce qui suit, les équipements désignés comme secondaires sont tous les équipements autres que l'instrument 3 optique, et comprennent par exemple l'électronique de commande du satellite, mais également des équipements assurant le bon fonctionnement de l'instrument 3 optique.

Selon le mode de réalisation présenté ici, le corps 7 principal présente au moins une paroi **8** latérale s'étendant sensiblement parallèle à l'axe V de visée de l'instrument optique entre une première extrémité **9** dite supérieure et une deuxième extrémité **10** dite inférieure.

En variante, le dispositif 7 de liaison peut être une ou plusieurs barres ou bielles reliant l'anneau 2 d'interface lanceur à l'instrument 3 optique. Le satellite 1 peut alors comprendre une structure supplémentaire sur laquelle les équipements secondaires peuvent être fixés.

Pour des raisons de simplification, dans le mode de réalisation qui suit, le dispositif 7 de liaison sera appelé corps principal du satellite 1.

L'extrémité 9 supérieure de la paroi 8 latérale est fixée sur la platine 6 de support, et plus précisément sur la surface 6b inférieure de la platine 6 de support. Par exemple, l'extrémité 9 supérieure est en contact sur l'ensemble de sa surface avec la surface 6b inférieure de la platine 6. Des moyens de liaison linéaires, c'est-à-dire s'étendant de manière continue sur l'ensemble de la surface de l'extrémité 9 supérieure, ou quasi-ponctuels assurent la fixation du corps 7 principal sur la platine 6.

L'anneau 2 d'interface lanceur du satellite 1 est relié au corps 7 principal par l'extrémité 10 inférieure, c'est-à-dire l'anneau 2 d'interface est disposé par rapport au corps 7 principal, en suivant l'axe V de visée, du côté de l'extrémité 10 inférieure et la liaison entre l'anneau 2 d'interface et le corps 7 principal prend appui sur l'extrémité 10 inférieure.

Ainsi, par exemple, l'extrémité 10 inférieure de la paroi 8 latérale est en appui direct sur l'anneau 2 d'interface, et la paroi 8 latérale est fixée à l'anneau 2 d'interface. En d'autres termes, au moins une portion de surface de l'extrémité 10 inférieure de la paroi 8 latérale est en contact avec au moins une portion de surface supérieure de l'anneau 2 d'interface.

Selon un autre exemple, l'extrémité 10 inférieure du corps 7 principal n'est pas en appui direct sur l'anneau 2 d'interface, mais un système d'amortissements des vibrations est placé entre la face supérieure de l'anneau 2 d'interface et l'extrémité 10 inférieure.

Ainsi, en faisant passer la liaison entre le corps 7 principal et l'anneau 2 d'interface par l'extrémité 10 inférieure, l'axe V de visée de l'instrument optique est sensiblement parallèle à l'axe A de l'anneau 2 d'interface. En outre, l'arrière du miroir M1 primaire étant en contact avec la platine 6, laquelle est fixée à l'extrémité 9 supérieure du corps 7 principal, l'axe V de visée est dirigé vers l'anneau 2 d'interface.

De manière générale, selon l'invention, l'axe optique de l'objectif ici confondu avec l'axe V de visée de l'instrument 3 optique, est dirigé de l'extrémité 9 supérieure vers l'extrémité 10 inférieure, et la fixation de l'objectif est éloignée de l'anneau 2 d'interface pour le protéger des chocs et des vibrations, lesquels sont au moins en partie absorbés par le corps 7 principal. Quand l'objectif est un télescope avec un miroir d'entrée celui-ci est alors éloigné de l'anneau 2 d'interface, en protégeant ainsi le miroir M₁ d'entrée.

En outre, selon l'invention, le dispositif 2 d'interface est à l'extérieur du champ de vue de l'instrument 3 optique. En d'autres termes, le dispositif 2 d'interface ne bloque pas une partie des rayons du champ de vue de l'instrument 3 optique, pour une résolution optimale de la région de prise de vue. En effet, selon l'exemple, le dispositif 2 d'interface sous forme d'anneau défini un contour fermé, avec un espace libre au milieu, au travers duquel passe le champ de vue de l'instrument 3.

Dans ce qui suit, l'adjectif « longitudinal » et ses variantes désigne la direction parallèle à l'axe A de l'anneau 2 d'interface et à l'axe V de visée ; l'adjectif « transversal » et ses variantes désigne les directions perpendiculaire à la direction longitudinale.

Selon un exemple de réalisation, la paroi 8 latérale est de forme cylindrique, de section circulaire ou polygonale, autour de l'axe V de visée. Par exemple, afin de former des surfaces sensiblement planes comme cela sera vu plus loin, la section de la paroi 8 latérale peut avantageusement être de section carrée. Dès lors, la paroi 8 latérale sépare un espace **11** intérieur du corps 7 de l'environnement extérieur. Plus précisément, la paroi 8 latérale présente une surface **12** intérieure, tournée vers l'axe V de visée, et une surface **13** extérieure, tournée à l'opposé de l'axe V de visée. L'espace 11 intérieur est alors délimité par la surface 12 intérieure, et entre les deux extrémités 9, 10 de la paroi 8 latérale, l'extrémité 9 supérieure étant fermée par la platine 6, l'extrémité 10 inférieure étant ouverte pour laisser les rayons R entrer dans l'instrument 3 optique et atteindre le miroir M₁ primaire qui s'étend dans l'espace 11 intérieur. Ainsi, l'extrémité 10 inférieure de la paroi 8 latérale est en appui, direct ou indirect, sur l'anneau 2 d'interface de sorte que l'axe V de visée de l'instrument 3 optique traverse l'anneau 2 d'interface.

Ainsi, seul le corps 7 principal du satellite est en contact avec l'anneau 2 d'interface, de sorte que les contraintes transmises au satellite 1 par le lanceur passent obligatoirement par le corps 7 principal, lequel absorbe au moins une partie de ces contraintes, et permet de protéger l'instrument 3 optique.

Des équipements secondaires, c'est-à-dire autres que l'instrument 3 optique, peuvent être montés sur le corps 7 principal et la platine 6. Notamment, des équipements secondaires peuvent être montés sur la surface 13 extérieure de la paroi 8 latérale, c'est-à-dire qu'ils sont en appui direct avec la surface 13 extérieure. La paroi 8 latérale de forme cylindrique peut être centrée, mais non nécessairement, sur l'axe V de visée, de sorte que l'instrument 3 optique est centré dans l'espace 11 intérieur. L'instrument 3 optique peut également être décentré dans l'espace 11 intérieur, de manière à dégager une zone permettant de fixer, en appui direct, sur la surface 12 intérieure des équipements secondaires, et notamment les équipements électroniques liés au fonctionnement de l'instrument 3 optique.

L'objectif de l'instrument 3 optique est par exemple un télescope, de type Korsch, comprenant le miroir **M₁** primaire et un miroir **M₂** secondaire. Le miroir M₁ primaire présente en son centre un perçage **14.** Les deux miroirs M₁ et M₂ sont disposés l'un en face de l'autre, de sorte qu'un rayon **R** entrant dans l'instrument 3 selon l'axe V de visée est d'abord réfléchi par le miroir M₁ primaire sur le miroir M₂ secondaire pour être de nouveau réfléchi par le miroir M₂ secondaire vers le miroir M₁ où il traverse le perçage 14. Le perçage 14 du miroir M₁ primaire coïncide avec un perçage **15** de la platine 6 de support pour laisser passer le rayon R à travers la platine 6 jusqu'à un système de détection de l'instrument 3 optique, monté par exemple à l'extérieur du corps 7 principal. Le système de détection comprend notamment un miroir **M₃** extérieur et au moins un capteur **16,** montés sur la surface 6a extérieure de la platine 6. Le miroir M₃ extérieur est placé en regard du perçage 15 de la platine 6, de manière à réfléchir le rayon R en direction de la surface fonctionnelle du capteur 16 monté sur la surface 6a supérieure de la platine 6 de support.

La platine 6 déborde transversalement au-delà de la paroi 8 transversale, c'est-à-dire qu'elle présente une dimension transversale supérieure à la dimension transversale de la paroi 8 latérale, ce qui permet d'augmenter la focale de l'instrument 3 sans augmenter sa longueur. En effet, le capteur 16 est placé sur un bord périphérique de la surface 6a supérieure de la platine, de sorte que plus la dimension transversale de la platine 6 est importante, plus la distance entre le capteur 16 et le miroir M₃ extérieur peut être importante. Avantageusement, la surface du capteur 16 orientée à l'opposé de sa surface fonctionnelle, c'est-à-dire vers l'espace lorsque le satellite est en orbite, peut être recouverte d'un matériau radiatif permettant de dissiper la chaleur générée au sein du satellite. Ainsi, l'éloignement du capteur 16 par rapport au miroir M₃ extérieur, et donc par rapport à l'instrument 3 optique, permet également une meilleure dissipation de la chaleur.

Les deux miroirs M₁ et M₂ de l'instrument 3 optique sont placés dans l'espace 11 intérieur du corps 7 principal, de sorte que la paroi 8 latérale forme une protection pour l'instrument 3 optique.

La paroi 8 latérale du corps 7 principal forme alors avantageusement un dispositif de protection pour l'instrument 3 optique. Par exemple, comme déjà mentionné, la paroi 8 latérale peut avoir une fonction de barrière aux rayons qui ne sont pas parallèles à l'axe V de visée.

La disposition des miroirs M₁ et M₂ de l'instrument 3 permet d'éloigner le miroir M₁ de l'anneau 2 d'interface, et donc de le protéger des contraintes transmises depuis le lanceur via l'anneau 2 d'interface lanceur.

De nombreuses variantes du satellite 1 sont possibles, par exemple dans la forme du corps 7 principal, dans le type d'instrument 3 optique, dans les dimensions et dans les fonctions supplémentaires que peut fournir le corps 7 principal.

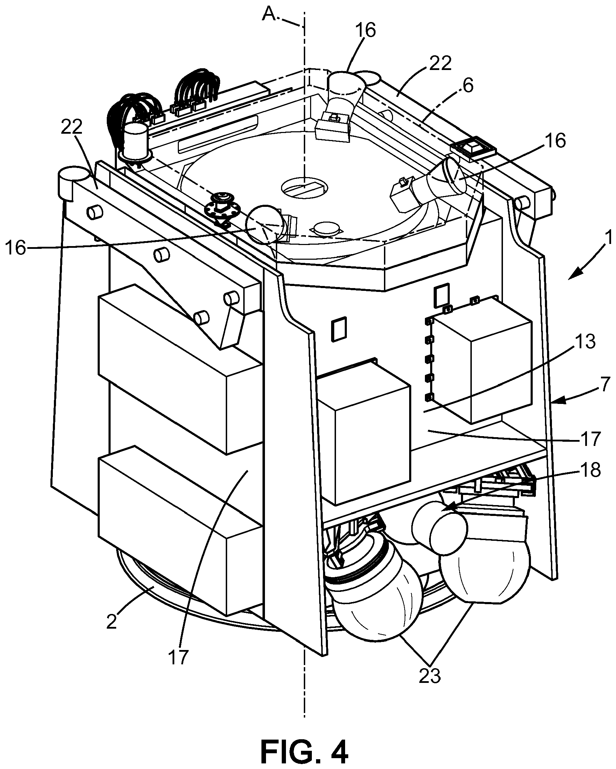

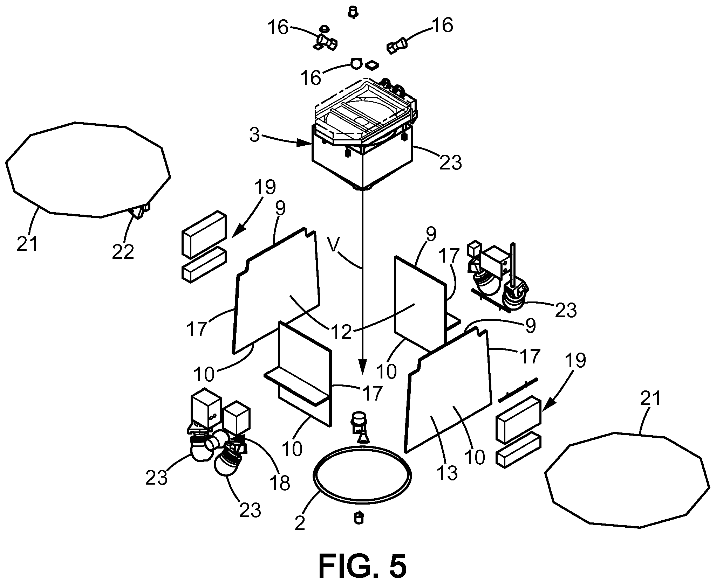

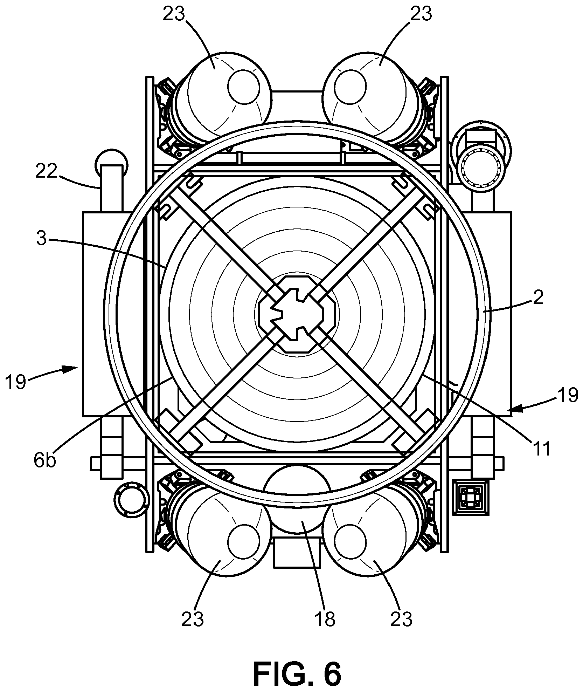

En référence aux figures 4 à 6, il va maintenant être décrit un mode de réalisation du satellite 1 selon l'invention, dans lequel l'instrument 3 optique est un télescope de type Korsch comme présenté ci-dessus. Les mêmes références seront employées pour désigner des éléments ou composants identiques ou analogues à ceux présentés en référence aux figures 2 et 3.

Sur la figure 4, la platine 6 est représentée en transparence, dévoilant le miroir primaire M₁ et des capteurs 16, le miroir extérieur du système de détection étant omis.

Selon ce mode de réalisation, la paroi 8 latérale du corps 7 principal est de section rectangulaire ou carrée, formée de quatre murs **17** sensiblement plans disposés sensiblement à 90°. Chacun des quatre murs 17 forme alors une facette intérieure sensiblement plane sur la surface 12 intérieure et une facette extérieure sensiblement plane sur la surface 13 extérieure de la paroi 8 latérale, permettant d'y fixer un équipement dit secondaire, c'est-à-dire autre que l'instrument 3 otique, participant au bon fonctionnement du satellite et au bon déroulement de sa mission.

La forme carrée ou rectangulaire de la section de la paroi 8 latérale permet d'optimiser l'encombrement selon les dimensions transversales dans le lanceur en prenant en compte les équipements secondaires montés sur la paroi 13 extérieure. Cependant d'autres formes polygonales peuvent être utilisées, notamment hexagonales ou octogonales.

Chaque mur 17 est fixé à l'anneau 2 d'interface par l'extrémité 10 inférieure. Plus précisément, deux portions de surface disjointes de l'extrémité 10 inférieure de chaque mur 17 sont en contact direct avec une surface supérieure de l'anneau 2 d'interface, formant quasiment deux points de contact ou zones de contact. La liaison entre chaque mur 17 et l'anneau 2 d'interface est alors assurée par exemple par une liaison quasi-ponctuelle, de type visserie, à chaque point ou zone de contact. En variante, chaque mur 17 peut n'avoir qu'un seul point ou une seule zone de contact avec l'anneau 2 d'interface.

Lorsque la section de la paroi 8 latérale est circulaire, le diamètre correspond avantageusement à celui de l'anneau 2 d'interface. Des moyens de liaison de type linéaire, tels que le collage, l'agrafage ou le soudage, peuvent alors être mis en place de manière continue sur la totalité de la surface de l'extrémité 10 inférieure et la surface supérieure de l'anneau 2 d'interface, améliorant la tenue mécanique.

De préférence, aucun autre élément du satellite 1 n'est en contact avec l'anneau 2 d'interface, de sorte que l'ensemble des contraintes sont transmises du lanceur au corps 7 principal.

Grâce aux facettes sensiblement planes formées par les murs 17, le montage d'équipement secondaire est aisé. En particulier, dans le mode de réalisation présenté ici, afin d'avoir une résolution la plus élevée possible, le télescope occupe la majeur partie, voire la totalité de l'espace 11 intérieur du corps 7 principal, c'est-à-dire que le miroir M₁ primaire présente un diamètre maximal. Les équipements secondaires sont alors de préférence fixés sur la surface 13 extérieure des murs 17, c'est-à-dire qu'ils sont en appui direct avec la surface 13 extérieure des murs 17. La planéité des murs 17 est particulièrement adaptée au montage d'équipements électroniques, mais pas exclusivement.

Ainsi, sur la surface 13 extérieure du corps 7 principal est monté un système **18** de propulsion. L'utilisation de la propulsion électrique est avantageuse car le volume d'ergols à emporter est nettement inférieur à celui d'une propulsion chimique classique. Le réservoir de gaz, en général du xénon peut ainsi être placé aisément à l'extérieur sur la surface 13 extérieure des murs 17, en conservant un encombrement selon les directions transversales acceptable dans le lanceur, ce qui permet de laisser l'espace 11 intérieur disponible pour l'instrument 3 d'optique, et le miroir M1 primaire pouvant s'étendre sur tout son diamètre dans l'espace 11 intérieur. Dans le cadre d'une mission de courte durée, une propulsion chimique classique peut cependant être utilisée, le volume d'ergol nécessaire étant faible et les réservoirs pouvant être accommodés sur la surface 13 extérieure du corps principal.

D'autres équipements **19** secondaires peuvent également être fixés sur la surface 13 extérieure des murs 17, tels que des batteries, des boîtiers de commandes, ou encore des capteurs.

Le satellite 1 peut en outre comprendre des panneaux **21** solaires rétractables, fixés sur la surface 13 extérieure du corps 7 principal au moyen de bras **22** pivotant.

Des moyens d'actionneurs, tels que des CMG 23 (acronyme pour Control Momentum Gyroscope) peuvent également être montés sur la surface 13 extérieure des murs 17.

Ainsi, la platine 6 de support et le corps 7 principal supportent ensemble la totalité des équipements du satellite 1. Il en résulte une grande modularité, les équipements secondaires pouvant être disposés sur la surface 13 extérieure des murs 17 indépendamment de l'instrument 3 optique. Le chemin des contraintes transmises par l'anneau 2 d'interface passe obligatoirement par la paroi 8 latérale du corps 7 principal, protégeant l'instrument 3 optique. La longueur de l'instrument 3 optique, c'est-à-dire sa dimension selon son axe V de visée, peut alors être augmentée, pour une longueur totale du satellite 1 inférieure par rapport à l'état de la technique. Lorsque l'instrument 3 optique est un télescope comme décrit précédemment, augmenter la longueur de l'instrument optique permet notamment d'augmenter la distance entre le miroir M₁ primaire et le miroir M₂ secondaire, et donc d'augmenter le diamètre des miroirs M₁ et M₂ tout en respectant les exigences dimensionnelles des principes d'optique. En augmentant le diamètre des miroirs M₁ et M₂, jusqu'à ce que le miroir M₁ primaire remplisse l'espace 11 intérieur, la résolution du télescope est augmentée.

A titre de comparaison, alors que le diamètre d'un miroir primaire d'un instrument optique d'un satellite selon l'état de la technique de la technique peut atteindre un diamètre de l'ordre de 40 à 50 cm (centimètres) dans un volume de coiffe VESPA pour VEGA, le miroir M₁ primaire du satellite selon la présente invention peut aller au-delà, jusqu'à atteindre le double, soit atteindre un diamètre jusqu'à 1 m, dans une configuration où l'interface lanceur est de 1194 mm et toujours dans un même volume de coiffe VESPA pour VEGA.

En d'autres termes, grâce notamment à la conception du satellite 1 dans laquelle les contraintes passent par la paroi 8 latérale du corps 7 principal, et en orientant l'instrument 3 optique de sorte que son axe V de visée soit dirigé vers l'extrémité 10 inférieure en liaison avec l'anneau 2 d'interface, la longueur totale de l'instrument 3 optique, et donc du satellite, peut être réduite pour conserver des performances au moins équivalents à celles de l'état de la technique. Or, comme présenté en introduction, la longueur du satellite 1 est la dimension la plus critique en termes d'encombrement dans le lanceur.

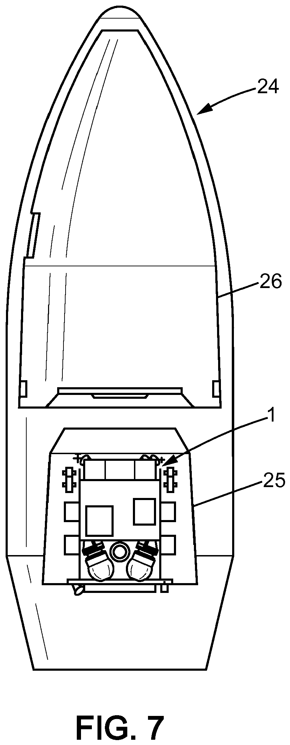

Le satellite 1 selon l'invention est alors particulièrement adapté à prendre la place dans le compartiment de la taille la plus faible dans le cas d'un système de lancement double, soit généralement le compartiment inférieur comme par exemple dans une structure VESPA pour un lanceur VEGA. La figure 7 illustre ainsi de manière schématique le volume de la coiffe 24 d'un lanceur VEGA comprenant une structure VESPA. Deux compartiments indépendants sont formés : un compartiment 25 inférieur et un compartiment 26 supérieur, les adjectif « inférieur » et « supérieur » étant employés ici en référence à l'orientation naturelle de la figure 7, laquelle correspond à l'orientation d'un lanceur posé au sol pour l'assemblage de satellites. Chaque compartiment 25, 26 est destiné à recevoir un satellite fixé à un anneau d'interface satellite.

Le compartiment 25 inférieur est de dimension restreinte, notamment dans le sens de la longueur du satellite placé dedans. Ainsi, le satellite 1 selon l'invention, dont la longueur est réduite tout en conservant les performances attendues, est particulièrement adapté à être placé dans le compartiment 25 inférieur.

Le satellite 1 peut être particulièrement adapté pour être empilé avec un autre satellite, de même conception ou de conception différente. A cet effet, selon un autre mode de réalisation, le dispositif 7 de liaison se présente sous la forme d'un cylindre central d'axe principal longitudinal, par exemple confondu avec l'axe A de l'anneau 2 d'interface. Le satellite 1 peut toujours comprendre des murs 17, lesquels sont fixés sur le cylindre 7 central. La platine 6 de support est fixée au cylindre 7 central. Par exemple, l'instrument 3 optique et la platine 6 de support sont logés à l'intérieur du cylindre 7 central. Le système de détection peut être monté à l'extérieur du cylindre 7 central, sur la surface de l'extrémité 9 supérieure. Le cylindre 7 central peut émerger au-delà des murs 17 de part et d'autre selon la direction longitudinale, de sorte que l'anneau 2 d'interface lanceur peut être fixé par l'extrémité 10 inférieure au cylindre 7 central, et l'extrémité 9 supérieure du cylindre 7 central est disponible pour y monter un système **27** d'interface auxiliaire, destiné à coopérer avec un système d'interface complémentaire d'un autre satellite. Comme pour l'anneau 2 d'interface lanceur, le système 27 d'interface auxiliaire peut être est un anneau d'interface, et sera désigné ainsi dans ce qui suit. L'anneau 27 d'interface auxiliaire présente une surface inférieure qui est fixée au cylindre 7 central.

Afin de faciliter l'empilement de deux satellites 1 de conception selon l'invention, l'anneau 27 d'interface auxiliaire d'un premier satellite 1 est destiné à coopérer avec l'anneau 2 d'interface lanceur du deuxième satellite 1.

Ainsi, les deux satellites 1 selon l'invention peuvent être superposés de la manière suivante.

Un premier satellite 1 est fixé à un anneau d'interface satellite d'un lanceur 28 par son anneau 2 d'interface lanceur. Le deuxième satellite 1 est placé sur le premier satellite 1 de sorte que leurs axes V de visée sont confondus, ou à tout le moins parallèles. L'extrémité 9 supérieure du premier satellite 1 est en vis-à-vis de l'extrémité 10 inférieure du deuxième satellite 1, et l'anneau 27 d'interface auxiliaire du premier satellite est mis en correspondance avec l'anneau 2 d'interface lanceur du deuxième satellite 1. Les deux anneaux 2, 27 assurent la liaison entre les deux satellites 1.

Eventuellement, le système de détection monté sur la surface de l'extrémité 9 supérieure du cylindre 7 central s'étend au-delà des murs 17 selon la direction longitudinale. Dans ce cas, le deuxième satellite 1 de l'empilement comprend un espace pour que le système de détection du premier satellite 1 vienne s'y loger lorsque les deux satellites 1 sont empilés.

Dans un tel empilement, l'ensemble des contraintes transmises par l'anneau 2' (voir figure 3) d'interface satellite du lanceur au premier satellite 1 passent par la paroi 8 latérale du corps 7 principal du premier satellite 1 et sont transmises à la paroi 8 latérale du corps 7 principal du deuxième satellite 1, protégeant là encore l'instrument 3 optique du deuxième satellite 1. Ainsi, le chemin mécanique par lequel passent les contraintes est localisé dans la paroi 8 latérale du corps 7 principal des deux satellites 1.

Il en est de même lorsque plus de deux satellites 1 selon l'invention sont empilés ainsi.

Le satellite 1 de conception selon l'invention permet donc de présenter une structure compacte tout en garantissant une performance, notamment en termes de résolution, de l'instrument 3 optique au moins équivalente à l'état de la technique.

La compacité du satellite 1 lui permet, outre de diminuer l'encombrement à performances égale par rapport à l'état de la technique, de diminuer son inertie et donc de faciliter le contrôle de l'attitude du satellite pour diminuer la consommation d'énergie.

En outre, la longueur du satellite étant diminuée, la surface exposée au vecteur vitesse est diminuée, diminuant par-là la traînée, et donc facilitant là encore le contrôle de l'attitude pour diminuer la consommation d'énergie.

Lorsque le satellite 1 est monté dans le lanceur, l'anneau 2 d'interface lanceur solidarisé à l'anneau 2' d'interface satellite, l'axe V de visée est orienté vers le bas selon le sens de la pesanteur. Ainsi, l'environnement dans le lanceur n'étant pas exempt de particules telles que des poussières, en orientant l'instrument 3 optique avec son axe de visée vers le bas, le miroir M₁ est protégé d'une contamination particulaire qui dégraderait les performances de l'instrument 3 optique.

## Revendications

1. Satellite (1) comprenant :
- au moins un instrument (3) optique de prise de vue comprenant un objectif principal présentant un axe (V) optique et l'instrument (3) optique présentant un champ de vue ;
- au moins un système (2) d'interface lanceur, destiné à être solidarisé de manière amovible à un système (2') d'interface satellite d'un lanceur du satellite ;
- un dispositif (7) de liaison entre ledit système (2) d'interface lanceur et l'instrument (3) optique s'étendant sensiblement parallèlement à l'axe (V) optique de l'objectif principal entre une extrémité (9) supérieure et une extrémité (10) inférieure ;
le satellite (1) étant **caractérisé en ce que** le système (2) d'interface lanceur est relié au dispositif (7) de liaison par l'extrémité (10) inférieure et **en ce que** l'axe (V) optique de l'instrument (3) optique est un axe de visée dirigé de l'extrémité (9) supérieure vers l'extrémité (10) inférieure du dispositif (7) de liaison, le système (2) d'interface lanceur étant à l'extérieur du champ de vue de l'instrument (3) optique, et **en ce que** l'extrémité (9) supérieure du dispositif (7) de liaison comprend un système (27) d'interface auxiliaire destiné à coopérer avec un autre satellite pour former un empilement.

2. Satellite (1) comprenant :
- au moins un instrument (3) optique de prise de vue comprenant un objectif principal présentant un axe (V) optique et l'instrument (3) optique présentant un champ de vue, l'objectif principal étant un télescope comprenant un miroir primaire ;
- au moins un système (2) d'interface lanceur, destiné à être solidarisé de manière amovible à un système (2') d'interface satellite d'un lanceur du satellite ;
- un dispositif (7) de liaison entre ledit système (2) d'interface lanceur et l'instrument (3) optique s'étendant sensiblement parallèlement à l'axe (V) optique de l'objectif principal entre une extrémité (9) supérieure et une extrémité (10) inférieure ; et
le satellite (1) étant **caractérisé en ce que** l'instrument optique (3) comprend en outre une platine de support (6), sur laquelle est fixé le miroir primaire, la platine (6) comprenant une surface intérieure (6a) et une surface supérieure (6b) s'étendant perpendiculairement à l'axe de visée de l'instrument optique (3), l'arrière du miroir primaire de l'instrument optique (3) étant en contact avec la surface inférieure (6b) de la platine de support (6), l'extrémité supérieure (9) du dispositif de liaison (7) étant fixée sur la surface inférieure (6b) de la platine de support (6),
et **en ce que** le système (2) d'interface lanceur est relié au dispositif (7) de liaison par l'extrémité (10) inférieure et **en ce que** l'axe (V) optique de l'instrument (3) optique est un axe de visée dirigé de l'extrémité (9) supérieure vers l'extrémité (10) inférieure du dispositif (7) de liaison, le système (2) d'interface lanceur étant à l'extérieur du champ de vue de l'instrument (3) optique.

3. Satellite (1) selon l'une des revendications 1 ou 2, dans lequel le dispositif (7) de liaison comprend une paroi (8) latérale de forme cylindrique d'axe parallèle à l'axe (V) de visée, et comprend une surface (12) intérieure tournée vers l'axe (V) de visée, définissant un espace (11) intérieur dans lequel s'étend au moins une partie de l'objectif principal de l'instrument (3) optique.

4. Satellite (1) selon la revendication 3, dans lequel l'objectif principal est un télescope comprenant au moins un miroir (M1) primaire, l'axe optique du miroir (M1) primaire étant l'axe optique de l'objectif, le miroir (M1) primaire s'étendant dans l'espace (11) intérieur.

5. Satellite (1) selon la revendication 3 ou la revendication 4, dans lequel la paroi (8) latérale est cylindrique de courbe directrice circulaire.

6. Satellite (1) selon la revendication 3 ou la revendication 4, dans lequel la paroi (8) latérale est cylindrique de courbe directrice polygonale.

7. Satellite (1) selon la revendication 6, dans lequel la paroi (8) latérale est cylindrique de courbe directrice carrée ou rectangulaire, de sorte que le dispositif (7) de liaison comprend quatre murs (17).

8. Satellite (1) selon l'une quelconque des revendications précédentes, comprenant en outre au moins un équipement (18, 19, 21, 22) secondaire fixé sur le dispositif (7) de liaison.

9. Satellite (1) selon la revendication 8, dans lequel l'équipement (18, 19, 21, 22) secondaire comprend un réservoir d'ergol pour la propulsion.

10. Satellite (1) selon la revendication 9, dans lequel l'équipement (18, 19, 21, 22) secondaire comprend un réservoir (18) de gaz pour la propulsion électrique.

11. Satellite (1) selon l'une quelconque des revendications précédentes, dans lequel le système (2) d'interface lanceur est un anneau d'interface, l'axe de visée (V) de l'instrument (3) optique traversant l'anneau d'interface.

12. Satellite (1) selon l'une quelconque des revendications précédentes dans lequel l'instrument (3) optique présente un diamètre supérieur à 50 cm.

13. Satellite (1) selon la revendication 12, dans lequel le diamètre de l'instrument (3) optique est de 100 cm.

## Patentansprüche

1. Satellit (1), umfassend:
- zumindest ein optisches Aufnahmeinstrument (3), das ein Hauptobjektiv umfasst, das eine optische Achse (V) aufweist, wobei das optische Instrument (3) zumindest ein Sichtfeld aufweist;
- zumindest ein Trägerraketen-Schnittstellensystem (2), das dazu bestimmt ist, abnehmbar mit einem Satelliten-Schnittstellensystem (2') einer Trägerrakete des Satelliten verbunden zu sein;
- eine Verbindungsvorrichtung (7) zwischen dem Trägerraketen-Schnittstellensystem (2) und dem optischen Instrument (3) die sich im Wesentlichen parallel zur optischen Achse (V) des Hauptobjektivs zwischen einem oberen Ende (9) und einem unteren Ende (10) erstreckt;
wobei der Satellit (1) **dadurch gekennzeichnet ist, dass** das Trägerraketen-Schnittstellensystem (2) durch das untere Ende (10) mit der Verbindungsvorrichtung (7) verbunden ist und dass die optische Achse (V) des optischen Instruments (3) eine vom oberen Ende (9) zum unteren Ende (10) der Verbindungsvorrichtung (7) gerichtete Sichtachse ist, wobei sich das Trägerraketen-Schnittstellensystem (2) außerhalb des Sichtfelds des optischen Instruments (3) befindet, und dass das obere Ende (9) der Verbindungsvorrichtung (7) ein Hilfsschnittstellensystem (27) umfasst, das dazu bestimmt ist, mit einem anderen Satelliten zusammenzuwirken, um einen Stapel auszubilden.

2. Satellit (1), umfassend:
- zumindest ein optisches Aufnahmeinstrument (3), das ein Hauptobjektiv umfasst, das eine optische Achse (V) aufweist, wobei das optische Instrument (3) ein Sichtfeld aufweist, wobei das Hauptobjektiv ein Teleskop ist, das einen Hauptspiegel umfasst;
- zumindest ein Trägerraketen-Schnittstellensystem (2), das dazu bestimmt ist, abnehmbar mit einem Satelliten-Schnittstellensystem einer Trägerrakete des Satelliten verbunden zu sein;
- eine Verbindungsvorrichtung (7) zwischen dem Trägerraketen-Schnittstellensystem (2) und dem optischen Instrument (3), die sich im Wesentlichen parallel zur optischen Achse (V) des Hauptobjektivs zwischen einem oberen Ende (9) und einem unteren Ende (10) erstreckt; und
wobei der Satellit (1) **dadurch gekennzeichnet ist, dass** das optische Instrument (3) ferner eine Tragplatte (6) umfasst, auf der der Hauptspiegel befestigt ist, wobei die Platte (6) eine innere Fläche (6a) und eine obere Fläche (6b) umfasst, die sich senkrecht zur Sichtachse des optischen Instruments (3) erstrecken, wobei die Rückseite des Hauptspiegels des optischen Instruments (3) mit der unteren Fläche (6b) der Tragplatte (6) in Kontakt steht, wobei das obere Ende (9) der Verbindungsvorrichtung (7) an der unteren Fläche (6b) der Tragplatte (6) befestigt ist, und dass das Trägerraketen-Schnittstellensystem (2) durch das untere Ende (10) mit der Verbindungsvorrichtung (7) verbunden ist und dass die optische Achse (V) des optischen Instruments (3) eine vom oberen Ende (9) zum unteren Ende (10) der Verbindungsvorrichtung (7) gerichtete Sichtachse ist, wobei sich das Trägerraketen-Schnittstellensystem (2) außerhalb des Sichtfelds des optischen Instruments (3) befindet.

3. Satellit (1) nach einem der Ansprüche 1 oder 2, wobei die Verbindungsvorrichtung (7) eine zylindrische Seitenwand (8) mit einer zur Sichtachse (V) parallelen Achse umfasst und eine Innenfläche (12) umfasst, die der Sichtachse (V) zugewandt ist und einen inneren Raum (11) definiert, in den sich mindestens ein Teil des Hauptobjektivs des optischen Fotoapparats (3) erstreckt.

4. Satellit (1) nach Anspruch 3, wobei das Hauptobjektiv ein Teleskop mit mindestens einem Primärspiegel (M1) ist, wobei die optische Achse des Primärspiegels (M1) die optische Achse des Objektivs ist, wobei sich der Primärspiegel (M1) in den Innenraum (11) erstreckt.

5. Satellit (1) nach Anspruch 3 oder Anspruch 4, wobei die Seitenwand (8) zylindrisch mit einer kreisförmigen Leitkurve ist.

6. Satellit (1) nach Anspruch 3 oder Anspruch 4, wobei die Seitenwand (8) zylindrisch mit einer polygonalen Leitkurve ist.

7. Satellit (1) nach Anspruch 6, wobei die Seitenwand (8) zylindrisch mit einer quadratischen oder rechteckigen Leitkurve ist, so dass die Verbindungsvorrichtung (7) vier Wände (17) umfasst.

8. Satellit (1) nach einem der vorangehenden Ansprüche, ferner umfassend mindestens ein an der Verbindungsvorrichtung (7) angebrachtes Sekundärgerät (18,19,21,22).

9. Satellit (1) nach Anspruch 8, wobei das Sekundärgerät (18,19,21,22) einen Treibstofftank für den Antrieb umfasst.

10. Satellit (1) nach Anspruch 9, wobei das Sekundärgerät (18,19,21,22) einen Gastank (18) für den elektrischen Antrieb umfasst.

11. Satellit (1) nach einem der vorangehenden Ansprüche, wobei das Trägerraketen-Schnittstellensystem (2) ein Schnittstellenring ist, wobei die Sichtachse (V) des optischen Fotoapparats (3) durch den Schnittstellenring hindurchführt.

12. Satellit (1) nach einem der vorangehenden Ansprüche, wobei der optische Fotoapparat (3) einen Durchmesser von mehr als 50 cm aufweist.

13. Satellit (1) nach Anspruch 12, wobei der Durchmesser des optischen Fotoapparats (3) 100 cm beträgt.

## Claims

1. Satellite (**1**) comprising:
- at least one optical photography instrument (**3**) comprising a main lens having an optical axis (**V**) and the optical instrument (**3**) having a field of view;
- at least one launcher interface system (**2**) intended to be removably secured to a satellite interface system (**2'**) of a launcher of the satellite;
- a linking device (**7**) between said launcher interface system (**2**) and the optical instrument (**3**) extending substantially parallel with the optical axis (**V**) of the main lens between a top end (**9**) and a bottom end (**10**);
the satellite (**1**) being **characterised in that** the launcher interface system (**2**) is connected to the linking device (**7**) by the bottom end (**10**) and **in that** the optical axis (**V**) of the optical instrument (**3**) is a line of sight directed from the top end (**9**) towards the bottom end (**10**) of the linking device (**7**), the launcher interface system (**2**) being outside the field of view of the optical instrument (**3**), and **in that** the top end (**9**) of the linking device (7) comprises an auxiliary interface system (27) intended to co-operate with another satellite to form a stack.

2. Satellite (1) comprising:
- at least one optical photography instrument (**3**) comprising a main lens having an optical axis (**V**) and the optical instrument (**3**) having a field of view, the main lens being a telescope comprising a primary mirror;
- at least one launcher interface system (**2**) intended to be removably secured to a satellite interface system (**2'**) of a launcher of the satellite;
- a linking device (**7**) between said launcher interface system (**2**) and the optical instrument (**3**) extending substantially parallel with the optical axis (**V**) of the main lens between a top end (**9**) and a bottom end (**10**); and
the satellite (**1**) being **characterised in that** the optical instrument (3) further comprises a support platform (6) to which the primary mirror is affixed, the platform (6) comprising a bottom surface (6a) and a top surface (6b) extending perpendicularly to the line of sight of the optical instrument (3), the rear of the primary mirror of the optical instrument (3) being in contact with the bottom surface (6b) of the support platform (6), the top end (9) of the linking device (7) being affixed to the bottom surface (6b) of the support platform (6),
and **in that** the launcher interface system (2) is connected to the linking device (7) by the bottom end (10) and **in that** the optical axis (V) of the optical instrument (3) is a line of sight directed from the top end (**9**) towards the bottom end (**10**) of the linking device (**7**), the launcher interface system (**2**) being outside the field of view of the optical instrument (**3**).

3. Satellite (**1**) as claimed in one of claims 1 or 2, wherein the linking device (**7**) comprises a lateral wall of cylindrical shape having an axis parallel with the optical axis (**V**) and comprises an inner surface (**12**) directed towards the optical axis (**V**) defining an internal space (**11**) through which at least a part of the main lens of the optical instrument (**3**) extends.

4. Satellite (**1**) as claimed in claim3, wherein the main lens is a telescope comprising at least one primary mirror (**M₁**), the optical axis of the primary mirror (**M₁**) being the optical axis of the lens, the primary mirror (**M₁**) extending into the internal space (**11**).

5. Satellite (**1**) as claimed in claim 3 or claim4, wherein the lateral wall (**8**) is cylindrical with a circular directrix curve.

6. Satellite (**1**) as claimed in claim 3 or claim4, wherein the lateral wall (**8**) is cylindrical with a polygonal directrix curve.

7. Satellite (**1**) as claimed in claim6, wherein the lateral wall (**6**) is cylindrical with a square or rectangular directrix curve so that the linking device (**7**) comprises four walls (**17**).

8. Satellite (**1**) as claimed in any one of the preceding claims, further comprising at least one secondary equipment (**18, 19, 21, 22**) attached to the linking device (**7**).

9. Satellite (**1**) as claimed in claim8, wherein the secondary equipment (**18, 19, 21, 22**) comprises a rocket propellant tank.

10. Satellite (**1**) as claimed in claim9, wherein the secondary equipment (**18, 19, 21, 22**) comprises a gas tank (**18**) for electric propulsion.

11. Satellite (**1**) as claimed in any one of the preceding claims, wherein the launcher interface system (**2**) is an interface ring, the optical axis (**V**) of the optical instrument (**3**) passing through the interface ring.

12. Satellite (**1**) as claimed in any one of the preceding claims, wherein the optical instrument (**3**) has a diameter greater than 50 cm.

13. Satellite (**1**) as claimed in claim12, wherein the diameter of the optical instrument (**3**) is 100 cm.
